# EUROPEAN PATENT APPLICATION

(11) **EP 1 673 982 A1**
(43) Date of publication of application: **28.06.2006**
(21) Application number: 04792355.2
(22) Date of filing: 14.10.2004
(51) Int. Cl.: A23J 3/32, A23L 1/325

(54) **PROTEIN FOOD MATERIAL HAVING CONTROLLED HYDROGEN SULFIDE ODOR AND METHOD OF CONTROLLING HYDROGEN SULFIDE ODOR**

(30) Priority: 16.10.2003 JP 2003356620
(71) Applicant: NIPPON SUISAN KAISHA, LTD., Tokyo 100-8686 (JP)
(72) Inventor: MORI, Takashi, c/o Nippon Suisan Kaisha, Ltd., Hachioji-shi, Tokyo 192-0906 (JP); KORIYAMA, Tsuyoshi, c/o Nippon Suisan Kaisha, Ltd., Hachioji-shi, Tokyo 192-0906 (JP)
(74) Representative: HOFFMANN EITLE
(86) International application number: PCT/JP2004/015123
(87) International publication number: WO 2005/036978

(57) **Abstract**

[Problems] To provide a method for controlling hydrogen sulfide odor generating in a treatment of a protein material at a high temperature under elevated pressure. Particularly, to provide a method for controlling hydrogen sulfide odor generating in the production of a food material having a fibrous texture by a treatment with an extruder at a high temperature under elevated pressure. Also, to provide a food material having controlled hydrogen sulfide odor which is obtained by treating a protein material at a high temperature under elevated pressure. [Means for Solving Problems] In the production of a food material obtainable by treating a protein material at a high temperature under elevated pressure, hydrogen sulfide odor is controlled by adding an ascorbic acid analog, preferably ascorbic acid, isoascorbic acid, dihydroascorbic acid or a salt thereof. This is appropriate for producing a food material wherein the treatment at a high temperature under elevated pressure is a treatment with an extruder, and is suitable for producing a food material having a fibrous texture. Also, a fish or shellfish material is favorable as the protein material.

## Description

### TECHNICAL FIELD

The invention relates to a food material produced by high-temperature and high-pressure treatment of a protein material. Illustratively, the invention relates to a method for controlling hydrogen sulfide odor generated in a treatment of a protein material at a high temperature under elevated pressure and a food material having controlled hydrogen sulfide odor. In particular, the invention relates to a method for controlling hydrogen sulfide odor generated in the production of a food material having a fibrous texture by a treatment with an extruder at a high temperature under elevated pressure.

According to the invention, the treatment at a high temperature under elevated pressure means a treatment at 110°C or more under 1 atmospheric pressure or more and means a treatment for generating hydrogen sulfide odor in subjecting protein materials to a heat treatment.

### BACKGROUND ART

In foods such as casing sausages and canned foods produced by a high-temperature heat treatment, hydrogen sulfide having an unpleasant smell is generally generated due to thermal degradation of protein used as the raw materials, so that the quality is spoiled in some cases.

Food materials having a fibrous texture produced by treating fish or shellfish meat with a twin screw extruder at a high temperature under elevated pressure have a crab-like or a scallop-like texture and are broadly used (Patent Document 1). Since such food materials produced by an extruder treatment are treated at further higher temperature (150°C or more) than casing sausages or the like, the generated amount of hydrogen sulfide is also markedly large, thus causing a very strong unpleasant smell.

In order to prevent the hydrogen sulfide odor in food materials produced by treating at a high temperature under elevated pressure, a method in which sodium sulfite or the like is added to a meat paste (Non-patent Document 1) is proposed for the production of casing sausages, or a method in which food materials after their production are secondarily frozen and then heat-treated in a solution containing an oxidizing agent or reducing agent (Patent Document 2) is proposed in the production of food materials with an extruder. However, the effect of inhibiting hydrogen sulfide generation is not perfect and the bad smell cannot be perfectly controlled. In addition, in the latter method in which a secondary treatment is carried out, facilities for secondary processes of freezing and boiling are required and the production period is also prolonged.

Accordingly, development of a more effective method for controlling hydrogen sulfide odor has been a great problem in producing food materials by extruder treatment.
Patent Document 1: Japanese Patent No. 2628220
Patent Document 2: Japanese Patent No. 2941416
Non-patent Document 1: M. Yamasawa, M. Murase and K. Shiga, *Nissui Shi* (Journal of the Japanese Society of Scientific Fisheries), No. 47 (2), 223 - 228 (1981)

### DISCLOSURE OF THE INVENTION

### Problems to be solved by the invention

An object of the invention is to control hydrogen sulfide odor which is generated when a food material is produced by subjecting a protein material to a treatment at a high temperature under elevated pressure with an extruder or the like.

### Means for solving the problems

The invention relates to a method for controlling hydrogen sulfide odor, which comprises adding an ascorbic acid analog, preferably ascorbic acid, isoascorbic acid, dihydroascorbic acid or a salt thereof, in the production of a food material obtainable by subjecting a protein material and an optional secondary material to a treatment at a high temperature under elevated pressure. This method is suitable for the production of a food material wherein the treatment at a high temperature under elevated pressure is carried out with an extruder, particularly for the production of a food material having a fibrous texture. In addition, fish and shellfish meat proteins are desirable as the protein materials.

Also, the invention relates to a method for producing a food material having a fibrous texture, which comprises adding to a protein material an ascorbic acid analog, preferably ascorbic acid, isoascorbic acid, dihydroascorbic acid or a salt thereof, together with secondary material, followed by a treatment at a high temperature under elevated pressure with an extruder.

Furthermore, the invention relates to a method for producing a food material having a fibrous texture, which comprises adding to a protein material an ascorbic acid analog, preferably ascorbic acid, isoascorbic acid, dihydroascorbic acid or a salt thereof, together with a secondary material, followed by a treatment at a high temperature under elevated pressure with an extruder, and further carrying out a freezing treatment and a heating treatment.

Moreover, the invention relates to a food material obtainable by subjecting a protein material and an optional secondary material to a treatment at a high temperature under elevated pressure, wherein the food material has controlled hydrogen sulfide odor by adding ascorbic acid analog, preferably ascorbic acid, isoascorbic acid, dihydroascorbic acid or a salt thereof in an amount of from 0.01 to 3.0%, preferably from 0.05 to 1.0%, in terms of ascorbic acid based on the protein material. This method is suitable for the production of a food material wherein the treatment at a high temperature under elevated pressure is carried out with an extruder, particularly for the production of a food material having a fibrous texture. In addition, fish and shellfish meat proteins are desirable as the protein materials.

### Effect of the invention

Hydrogen sulfide odor which is generated when a protein material is treated at a high temperature under elevated pressure can be controlled. The hydrogen sulfide odor which is generated by a treatment at a high temperature under elevated pressure can be controlled by simply adding ascorbic acid analog, preferably ascorbic acid, isoascorbic acid, dihydroascorbic acid or a salt thereof, to the material to be heated.

### BEST MODE FOR CARRYING OUT THE INVENTION

According to the invention, any substance can be applied as the protein material, so long as it is a protein such as fish meat or meat, but it is particularly suitable for products using raw fish or shellfish meat paste or minced fish or shellfish meat as the raw material. Although the kind of the fish is not particularly limited, it is possible to use various fish bodies such as mackerel, sardine, lizard fish, cod and Alaska pollack, which are made into minced meat by using a fish meat collecting machine or made into meat paste by being water-washed after removing head, intestinal organs, bones and the like uneatable parts. In addition, meat of crustaceans such as crab and shrimp and other meat of various shellfishes and mollusk meat can also be used. They may be used alone or as a combination of two or more thereof.

According to the invention, although protein materials alone may be used as raw material, various secondary materials can be optionally added. The secondary materials include, for example, wheat flour, soybean flour and potato starch. Various secondary materials generally used in producing protein food materials can be used. Their kinds, mixing ratios and the like are optional, and various food products can.be obtainable depending on their selection. In addition, additives such as seasonings and coloring agents can also be added.

According to the invention, the treatment at a high temperature under elevated pressure means a treatment at 110°C or more under 1 atmospheric pressure or more and which generates hydrogen sulfide odor when a protein material is subjected to the heat treatment. A retort treatment of casing packed food, retortable pouched food, canned food and the like, an extruder treatment and the like, which are carried out for sterilization or cooking, can be exemplified.

According to the invention, the treatment of protein material, together with a secondary material which is optionally added, at a high temperature under elevated pressure can be carried out with a usual extruder. Since the moisture content of the material is large, a twin-screw extruder is desirable. As is well known, extruders can carry out temperature treatments or mechanical treatments such as transfer, compression, mixing, kneading, shearing, heating, sterilization, swelling and forming within a short period of time, and therefore are useful in producing various types of foods. The extruder is constructed by 5 members, a feeder, a barrel, a screw, a die and a heater. Further, induction nozzle having a flat, circular, double cylindrical or the like shape may be optionally arranged in combination with the die or in a removable manner on the tip of the die.

The treating conditions of the extruder are optionally determined, but it is desirable that the feeding rate of the mixture of the protein material and a secondary material additive agent which is optionally added is from 50 to 3000 g per minute, the screw revolution speed is from 100 to 200 rpm per minute, and the barrel temperature is from 50 to 250°C. In addition, when an induction nozzle is arranged, it is desirable that the melting protein temperature at the axis tip is set to a heat melting state of from 110 to 200°C, then the temperature is increased or maintained as such at the first half part of the induction nozzle, and the product temperature is set to 100°C or less by further cooling at the latter half part of the induction nozzle.

Since hydrogen sulfide is generated from the food material obtained in this manner, its quality is considerably spoiled by the smell unless carrying out a particular treatment. According to the invention, the hydrogen sulfide generating from the food material can be controlled by simultaneously adding an ascorbic acid analog, preferably ascorbic acid, sodium ascorbate, isoascorbic acid, sodium isoascorbate or dihydroascorbic acid, in an amount of from 0.01 to 3.0%, preferably from 0.05 to 1.0%, based on the fish or shellfish meat, when a secondary material is added to the protein material before heating. The ascorbic acid analog means a substance which acts in the same manner as ascorbic acid by degradation or the like, such as various esters of ascorbic acid including ascorbic acid stearic acid ester and ascorbic acid palmitic acid ester, or salts of various esters of ascorbic acid. In addition, an oxidized form ascorbic acid such as dihydroascorbic acid is also effective.

In addition, the amount of hydrogen sulfide decreases gradually when the food material of the invention is allowed to stand as it is after its production. Even after the heating, ascorbic acid and the like in tissues are considered to continue the reaction with hydrogen sulfide. According to the heating in a meat paste, ascorbic acid becomes an oxidized ascorbic acid, and the oxidized ascorbic acid reacts with the generated hydrogen sulfide and changes into an insoluble matter, so that the hydrogen sulfide odor is controlled.

By the addition of ascorbic acid or its analogous compound, an excellent food material can be obtained in the same manner as in the case of adding nothing, without influence on the conditions in producing the food material. In addition, even when boiling, freezing and thawing are carried out thereafter, the effects of the invention can be obtained similarly.

Examples of the invention are described in the following, but the invention is not limited thereto.

### Example 1

### Test Example: Amount of hydrogen sulfide generating from a heated fish meat in a retort treatment model system (high-temperature and high-pressure system)

### (Method)

A 100 g portion of a raw lizard fish meat paste was kneaded with 1 g of potato starch and 1.2 g of albumen, and a 10 g portion thereof was packed in a cylindrical pressure container (10 cc in capacity), sealed and then heated in an oil bath. After heating at from 100 to 180°C for 10 minutes, the mixture was cooled with tap water of 18°C for 20 minutes while packed in the pressure container, and the contents after completion of the cooling were taken out and used as the model samples of high temperature-treated food material. Regarding the amount of hydrogen sulfide, 10 g of each of the food material model samples was sealed in a 100 cc capacity vial bottle and kept at 25°C for 30 minutes, and then the amount of hydrogen sulfide in the head space was measured using a gas detection tube (manufactured by Gastec Corporation). Measurement of hydrogen sulfide (kept at 25°C for 30 minutes) was started 30 minutes after completion of the heating in the pressure container.

### (Results)

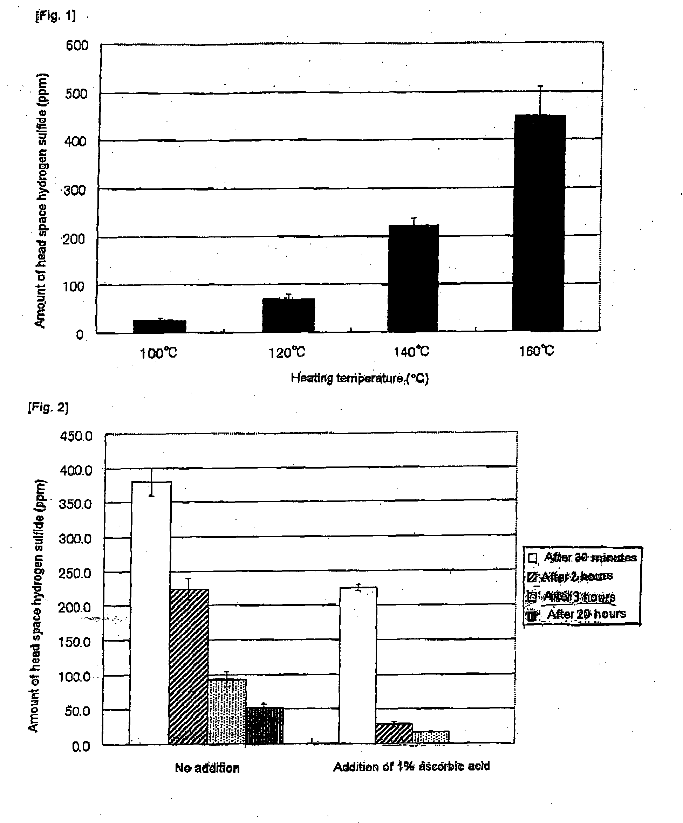

The results are shown in Fig. 1. Although the generation amount of hydrogen sulfide was about 25 ppm in the case of heating at 100°C, the generation amount of hydrogen sulfide was 400 to 450 ppm in the case of heating at 160°C. Since the generation amount of hydrogen sulfide in the case of actually using an extruder is from 350 to 400 ppm, the result of the heating conditions at 160°C was the amount of hydrogen sulfide closest to that of the production condition of a food material having a fibrous texture.

### Example 2

### Deodorizing effect by the addition of ascorbic acid to fish meat protein

### (Method)

Using a raw lizard fish meat paste, high-temperature and high-pressure treated model samples were prepared by the same method as in Example 1. The heating conditions in that case were set to 160°C for 10 minutes. The amount of hydrogen sulfide was determined for those in which nothing was added to the meat paste (no addition) and those in which 1% of ascorbic acid was added to the meat paste. Measurement of the amount of hydrogen sulfide was started after 30 minutes, after 2 hours, after 3 hours and after 20 hours after completion of the heating by the same method as in Example 1.

### (Results)

The results are shown in Fig. 2. Those in which nothing was added to the meat paste showed a residual hydrogen sulfide of about 50 ppm even after cold storage for 20 hours. When ascorbic acid was added, the remaining amount of hydrogen sulfide was smaller than that of the case of no addition at the time of 30 minutes after heating, and further, the remaining amount of hydrogen sulfide was about 0.5 ppm after 20 hours.

It was shown by the results that the hydrogen sulfide formation-inhibiting effect and deodorizing effect are obtained by the adding ascorbic acid to the meat paste.

### Example 3

### Generation amount of hydrogen sulfide and deodorizing effect by sodium ascorbate in the case of using soybean protein as raw material

### (Method)

High-temperature and high-pressure treated model samples were prepared by the same method as in Example 1. Soybean protein was used as the raw material, and the heating was carried out after adjusting its moisture content to 70%. Amounts of hydrogen sulfide were compared on those in which ascorbic acid was not added to the soybean protein and those in which 1% of sodium ascorbate was added thereto. Measurement of the amount of hydrogen sulfide was started after 30 minutes, after 2 hours, after 3 hours and after 20 hours after completion of the heating.

### (Results)

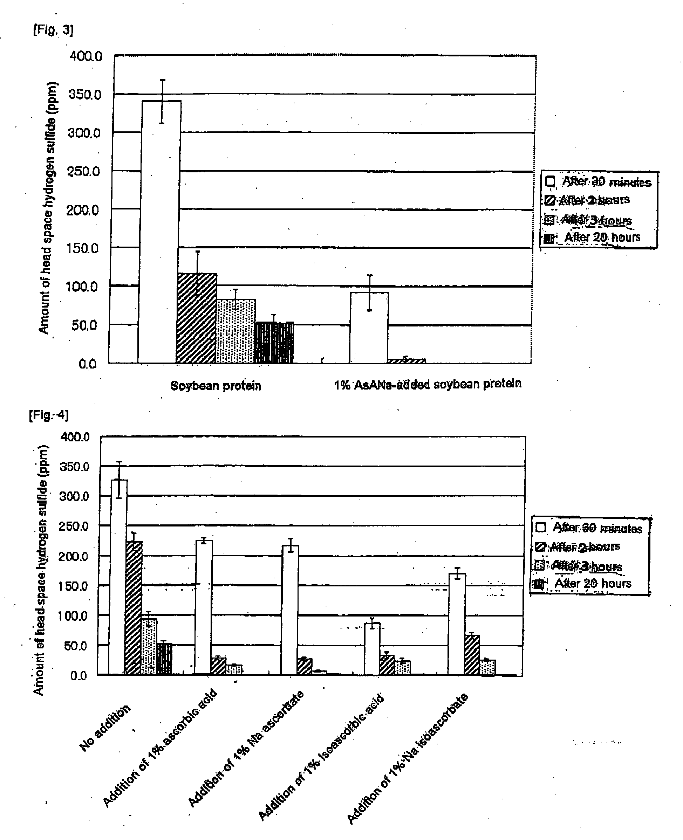

The results are shown in Fig. 3. Those in which nothing was added to the soybean protein showed a remaining amount of hydrogen sulfide of about 50 ppm even after cold storage for 20 hours. When ascorbic acid was added, the remaining amount of hydrogen sulfide was smaller than that of the case of no addition at the time of 30 minutes after heating, and further, the remaining amount of hydrogen sulfide was about 0.4 ppm after 3 hours.

It was shown by the results that the hydrogen sulfide formation-inhibiting effect and deodorizing effect are obtained by the adding ascorbic acid to the soybean protein.

### Example 4

### Comparison with the secondary deodorization treatment (the method of Japanse Patent No. 2941416)

### (Method)

Using a raw lizard fish meat paste, high-temperature and high-pressure treated model samples were prepared by the same method as in Example 1. The high-temperature and high-pressure treated samples in which nothing was added to the meat paste were frozen at -25°C followed by boiling for 1 hour in 10-fold volume of hot water. After the boiling and subsequent cooling, the amount of hydrogen sulfide was determined. Regarding the samples in which ascorbic acid was added to the meat paste, the amount of hydrogen sulfide was measured after cold storage for 20 hours by the same method as in Test Example 1.

### (Results)

Results of the comparison of remaining amounts of hydrogen sulfide between in the case of the secondary treatment and in the case of adding the ascorbic acid are shown in Table 1. When the secondary treatment such as freezing, thawing and boiling was carried out, about 20 ppm of remaining hydrogen sulfide was observed even after the treatment, whereas when the ascorbic acid was added, about 0.2 ppm of remaining hydrogen sulfide was observed during the cold storage for 20 hours. Accordingly, it was found that the deodorizing effect is larger by the addition of the ascorbic acid than the secondary treatments such as boiling.

It was shown based on the results that the deodorizing effect obtained by the invention is larger than that obtained by the secondary treatment.

**Table 1**

| Test plot | Head space hydrogen sulfide (ppm) |
|---|---|
| Freezing, thawing and boiling | 18.7 ± 2.3 |
| Addition of 1% ascorbic acid (allowed to stand 20 hours) | 0.5 ± 0.1 |

### Example 5

### Deodorizing effect by ascorbic acid analog compounds

### (Method)

Using a raw lizard fish meat paste, high-temperature and high-pressure treated model samples were prepared by the same method as in Example 1. In this case, samples in which nothing was added to the meat paste and samples in which ascorbic acid, sodium ascorbate, isoascorbic acid or sodium isoascorbate was respectively added as secondary materials to the meat paste at a ratio of 1% were prepared. The high-temperature and high-pressure treated samples were cold-straged, and respective amounts of hydrogen sulfide until 20 hours thereafter were measured by the same method as in Test Example 1.

### (Results)

Changes in the amounts of hydrogen sulfide of respective samples in the test are shown in Fig. 4. Remaining amounts of hydrogen sulfide after 20 hours of leaving by cold storage were from 0.2 to 0.5 ppm in all the cases of ascorbic acid, sodium ascorbate, isoascorbic acid and sodium isoascorbate, thus showing that they have similar deodorizing effect.

It was shown by the results that the ascorbic acid analog compounds have deodorizing effect similar to that of ascorbic acid.

### Example 6

### Ascorbic acid concentration and its deodorizing effect

### (Method)

Using a raw lizard fish meat paste, high-temperature and high-pressure treated model samples were prepared by the same method of Example 1. In this case, sodium ascorbate was added to the meat paste in an amount of from 0 to 1.0%. Regarding the high-temperature and high-pressure treated samples, they were cold-straged, and respective amounts of hydrogen sulfide until 20 hours thereafter were measured by the same method as in Test Example 1.

### (Results)

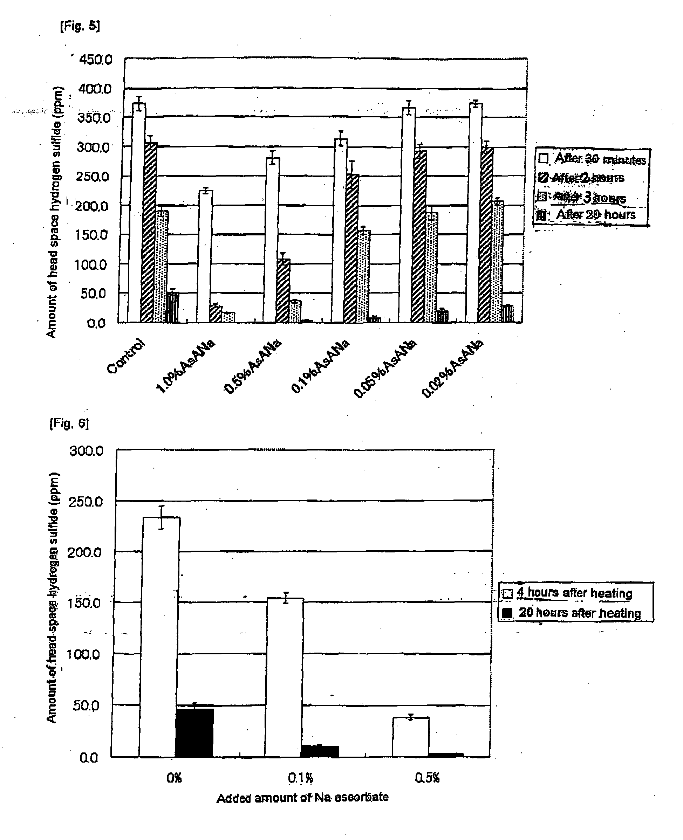

Changes in the amount of hydrogen sulfide of respective samples in the test are shown in Fig. 5. As a result, the amount of hydrogen sulfide remaining after 20 hours decreased depending on the concentration of sodium ascorbate. In addition, it was found that the amount of hydrogen sulfide remaining after 20 hours was about 4 ppm even by the addition of 0.5%.

### Example 7

### Deodorizing effect by the addition of ascorbic acid to the high-temperature and high-pressure treated sample prepared by an extruder

### (Method)

A 100 kg portion of a raw lizard fish meat paste, 1 kg of potato starch and 1.2 kg of albumen were subjected to a high-temperature and high-pressure treatment using a twin screw extruder (manufactured by Suehiro EPM) equipped with a cylindrical cooling die. In this case, the feeding rate of the meat paste was maintained at 800 g/minute, the screw revolution speed was maintained at 165 rpm and the barrel temperature was maintained at 200°C. The amount of hydrogen sulfide was determined for a sample in which nothing was added to the meat paste and samples in which from 0 to 0.5% of sodium ascorbate was added to the meat paste. The amount of hydrogen sulfide was measured after'4 hours and after 20 hours of the preparation by the same method as in Test Example 1.

### (Results)

The results are shown in Fig. 6. The sample in which nothing was added to the meat paste showed a hydrogen sulfide remaining amount of about 50 ppm even after cold storage for 20 hours. However, the amount of hydrogen sulfide remaining after 20 hours was about 3 ppm when 0.5% sodium ascorbate was added. In addition, the amount of remaining hydrogen sulfide 20 hours after the heating was about 3 ppm even when 0.1% sodium ascorbate was added.

It was shown from the results that the hydrogen sulfide formation-inhibiting effect and deodorizing effect are obtained by adding ascorbic acid to the meat paste, also in the case of a high-temperature and high-pressure treated sample prepared using an extruder.

### INDUSTRIAL APPLICABILITY

According to the invention, hydrogen sulfide odor can be controlled by a simple method, in the production of food material wherein a protein material is treated at a high temperature under elevated pressure. In addition, a food material having controlled hydrogen sulfide odor, which is obtained by treating a protein material at a high temperature under elevated pressure, can be provided.

### BRIEF DESCRIPTION OF THE DRAWINGS

Fig. 1 is a graph showing a relationship between heating temperature and generation amount of hydrogen sulfide.
Fig. 2 is a graph showing changes in the remaining amount of hydrogen sulfide by addition of ascorbic acid to a fish meat protein.
Fig. 3 is a graph showing changes in the remaining amount of hydrogen sulfide by addition of sodium ascorbate to soybean protein.
Fig. 4 is a graph showing influence of addition of ascorbic acid analog compounds upon the remaining amount of hydrogen sulfide.
Fig. 5 is a graph showing a relationship between added amount of sodium ascorbate and remaining amount of hydrogen sulfide. (In the drawing, AsANa represents sodium ascorbate.)
Fig. 6 is a graph showing effect of addition of sodium ascorbate on the remaining amount of hydrogen sulfide in high-temperature and high-pressure treated samples prepared using an extruder.

## Claims

1. A method for controlling hydrogen sulfide odor, which comprises adding an ascorbic acid analog in the production of a food material obtainable by subjecting a protein material and an optional secondary material to a treatment at a high temperature under elevated pressure.

2. The method for controlling hydrogen sulfide odor according to claim 1, wherein the ascorbic acid analog is ascorbic acid, isoascorbic acid, dihydroascorbic acid or a salt thereof.

3. The method for controlling hydrogen sulfide odor according to claim 1 or 2, wherein the treatment at a high temperature under elevated pressure is carried out with an extruder.

4. The method for controlling hydrogen sulfide odor according to any one of claims 1, 2 and 3, wherein the food material obtainable by the treatment at a high temperature under elevated pressure is a material having a fibrous texture.

5. The method for controlling hydrogen sulfide odor according to any one of claims 1 to 4, wherein the protein material is a fish or shellfish protein.

6. A method for producing a food material having a fibrous texture, which comprises adding to a protein material an ascorbic acid analog together with a secondary material, followed by a treatment at a high temperature under elevated pressure with an extruder.

7. The method for producing a food material having a fibrous texture according to claim 6, wherein the ascorbic acid analog is ascorbic acid, isoascorbic acid, dihydroascorbic acid or a salt thereof.

8. The method for producing a food material having a fibrous texture according to claim 6 or 7, which further comprises carrying out a freezing treatment and a heating treatment after the treatment at a high temperature under elevated pressure.

9. The method for producing a food material having a fibrous texture according to any one of claims 6, 7 and 8, wherein the protein material is a fish or shellfish protein.

10. A food material obtainable by subjecting a protein material and an optional secondary material to a treatment at a high temperature under elevated pressure, wherein the food material has controlled hydrogen sulfide odor by adding an ascorbic acid analog in an amount of from 0.01 to 3.0% in terms of ascorbic acid based on the protein material.

11. A food material obtainable by subjecting a protein material and an optional secondary material to a treatment at a high temperature under elevated pressure, wherein the food material has controlled hydrogen sulfide odor by adding an ascorbic acid analog in an amount of from 0.05 to 1.0% in terms of ascorbic acid based on the food material.

12. The food material having controlled hydrogen sulfide odor according to claim 10 or 11, wherein the ascorbic acid analog is ascorbic acid, isoascorbic acid, dihydroascorbic acid or a salt thereof.

13. The food material having controlled hydrogen sulfide odor according to any one of claims 10, 11 and 12, wherein the treatment at a high temperature under elevated pressure is carried out with an extruder.

14. The food material having controlled hydrogen sulfide odor according to any one of claims 10 to 13, wherein the food material obtainable by the treatment at a high temperature under elevated pressure is a food material having a fibrous texture.

15. The food material having controlled hydrogen sulfide odor according to any one of claims 10 to 14, wherein the protein material is a fish or shellfish protein.
